# EUROPEAN PATENT SPECIFICATION

(11) **EP 4 043 396 B1**
(45) Date of publication and mention of the grant of the patent: **24.09.2025**
(21) Application number: 21738590.5
(22) Date of filing: 08.01.2021
(51) Int. Cl.: C01B 32/198, H01M 4/13, H01M 4/36, H01M 4/62, H01M 4/38, H01M 4/139

(54) **REDUCED POROUS GRAPHENE OXIDE, MANUFACTURING METHOD THEREFOR, SULFUR-CARBON COMPOSITE COMPRISING SAME, AND LITHIUM SECONDARY BATTERY**
REDUZIERTES PORÖSES GRAPHENOXID, VERFAHREN ZU SEINER HERSTELLUNG, DIESELBE UMFASSENDE SCHWEFELKOHLENSTOFFVERBUNG UND LITHIUMSEKUNDÄRBATTERIE
OXYDE DE GRAPHÈNE POREUX RÉDUIT, SA MÉTHODE DE FABRICATION, COMPOSITE SOUFRE-CARBONE LE COMPRENANT, ET BATTERIE SECONDAIRE AU LITHIUM

(30) Priority: 10.01.2020 KR 20200003829
(43) Date of publication of application: 17.08.2022
(73) Proprietor: LG ENERGY SOLUTION, LTD., Seoul 07335 (KR)
(72) Inventor: YANG, Seungbo, Daejeon 34122 (KR); SOHN, Kwonnam, Daejeon 34122 (KR)
(74) Representative: Hoffmann Eitle
(86) International application number: PCT/KR2021/000280
(87) International publication number: WO 2021/141455

(56) References cited:
- CN-A- 107 434 248
- CN-B- 106 981 649
- KR-A- 20160 100 268
- KR-A- 20170 054 053
- KR-A- 20180 024 917
- KR-A- 20180 024 917
- KR-B1- 101 878 759
- US-A1- 2016 043 384
- DATABASE WPI Week 201846, Derwent World Patents Index; AN 2018-49819R, XP002807789
- DATABASE WPI Week 201819, Derwent World Patents Index; AN 2018-194185, XP002807790
- DATABASE WPI Week 201736, Derwent World Patents Index; AN 2017-321837, XP002807791

## Description

### Technical Field

The present invention relates to a porous reduced graphene oxide, a method for manufacturing the same, a sulfur-carbon composite and a lithium secondary battery including the same.

### Background Art

Graphite-based carbon materials comprising fullerene, carbon nanotubes, and graphene, which are nanomaterials composed of only carbon atoms, have excellent electrical properties, and physical and chemical stability, and thus are attracting attention from academia and industry.

In addition, in recent years, in order to compensate for insufficient characteristics or induce an effect of improving performance of the carbon body which is applied to electrodes and super capacitors for secondary batteries or to environmental adsorbents, surface functionalization through surface activation and doping is performed.

In particular, graphene is a material that is in the spotlight as an innovative new material due to its very high specific surface area compared to its volume, excellent electrical conductivity, and physical and chemical stability. Among carbon materials, graphene can be mass-produced through chemical oxidation, exfoliation process, and chemical or thermal reduction treatment of abundant and inexpensive natural or synthetic graphite as a raw material, and its preparation method is disclosed.

However, as the graphene has a two-dimensional sheet (2D sheet) structure that limits mass transfer in a vertical direction, various studies to facilitate mass transfer are being conducted.

A lithium-sulfur (Li-S) battery is a secondary battery using a sulfur-based material having a sulfur-sulfur bond (S-S bond) as a positive electrode active material and using lithium metal as a negative electrode active material. There is an advantage that sulfur, which is the main material of the positive electrode active material, is very rich in resources, is not toxic, and has a low atomic weight. In addition, theoretical discharging capacity of the lithium-sulfur battery is 1,675 mAh/g-sulfur, and its theoretical energy density is 2,600 Wh/kg. Since the theoretical energy density of the lithium-sulfur battery is much higher than the theoretical energy density of other battery systems currently under study (Ni-MH battery: 450Wh/kg, Li-FeS battery: 480Wh/kg, Li-MnO₂ battery: 1,000Wh/kg, Na-S battery: 800Wh/kg), the lithium-sulfur battery is the most promising battery among the batteries developed so far.

During the discharging of the lithium-sulfur battery, an oxidation reaction of lithium occurs at the negative electrode and a reduction reaction of sulfur occurs at the positive electrode. Sulfur before discharging has an annular S₈ structure. During the reduction reaction (discharging), as the S-S bond is cut off, the oxidation number of S decreases, and during the oxidation reaction (charging), as the S-S bond is re-formed, electrical energy is stored and generated using an oxidation-reduction reaction in which the oxidation number of S increases. During this reaction, the sulfur is converted from the cyclic S₈ structure to the linear lithium polysulfide (Li₂Sₓ, x = 8, 6, 4, 2) by the reduction reaction and eventually, when the lithium polysulfide is completely reduced, lithium sulfide (Li₂S) is finally produced. By the process of reducing to each lithium polysulfide, the discharging behavior of the lithium-sulfur battery is characterized by showing the discharge voltage step by step unlike a lithium ion battery.

In order to improve the performance of such a lithium-sulfur battery, the reactivity of the positive electrode active material must be maximized. Since sulfur used as a positive electrode active material of a lithium-sulfur battery has no conductivity, a sulfur-carbon composite mixed with an electrically conductive material is mainly used. Accordingly, the sulfur-carbon composite should be maximized in reactivity by improving sulfur content, mass transfer, and wettability to an electrolyte solution.

However, it is still difficult to provide a sulfur-carbon composite capable of improving all of the sulfur content, mass transfer, and wettability to an electrolyte solution and thus there is a need for continuous research on this.

### Prior Art Documents

### Patent Documents

Korean Patent No. 10-1900572

KR 10-2018-0066615 A, US 2016/043384 A1 and WO 2018/044110 A1 disclose reduced graphene oxide in the context of lithium secondary batteries.

### Technical Problem

The inventors of the present invention have conducted multi-faceted studies, and as a result, have confirmed that when a porous reduced graphene oxide is used as a carbon material of sulfur-carbon composite, the loading amount of sulfur can be increased due to the pores, so that reactivity can be increased, and the ability of mass transfer and wettability to electrolyte solution can be improved. Accordingly, the inventors of the present invention have confirmed that the initial discharging capacity of a lithium secondary battery, preferably a lithium-sulfur battery comprising the same, can be increased, thereby completing the present invention.

Therefore, it is an object of the present invention to provide a porous reduced graphene oxide and a method for preparing the same.

In addition, it is another object of the present invention to provide a sulfur-carbon composite comprising the porous reduced graphene oxide as a carbon material, and a lithium secondary battery comprising the same.

### Technical Solution

To achieve the above objectives, the present invention provides a porous reduced graphene oxide comprising meso and macro pores having a size of 2 to 500 nm, wherein the porous reduced graphene oxide is spherical with a diameter of 3 µm or more and less than 10 µm.

In addition, the present invention provides a method for preparing the porous reduced graphene oxide comprising the steps of
(a) preparing a dispersion in which template particles and graphene oxide are mixed;
(b) spray-drying the dispersion to prepare a template particle-graphene oxide composite;
(c) heat-treating the template particle-graphene oxide composite to remove the template particles and prepare the porous reduced graphene oxide.

In addition, the present invention provides a sulfur-carbon composite containing the porous reduced graphene oxide of the present invention and sulfur contained in at least a part of the inside and the surface of the porous reduced graphene oxide.

In addition, the present invention provides a lithium secondary battery including a positive electrode; a negative electrode; a separator interposed between the positive electrode and the negative electrode; and an electrolyte solution, wherein the positive electrode comprises the sulfur-carbon composite of the present invention.

### Advantageous Effects

As the porous reduced graphene oxide of the present invention contains meso and macro pores, it has excellent mass transfer and wettability by the electrolyte solution, and has the advantage of increasing the loading amount of sulfur.

Therefore, the lithium secondary battery containing sulfur-carbon composite using it as a carbon material has excellent reactivity and can exhibit an effect of showing high initial discharging capacity.

### Description of Drawings

FIG. 1 is a schematic diagram showing the structure of the porous reduced graphene oxide of the present invention.
FIG. 2 is a SEM image of the porous reduced graphene oxide of Example 1 magnified by 500,000 times.
FIG. 3 is a SEM image of the porous reduced graphene oxide of Example 1 magnified by 200,000 times.
FIG. 4 is a SEM image of the porous reduced graphene oxide of Example 1 magnified by 100,000 times.
FIG. 5 is a SEM image of a sulfur-carbon composite (S-porous rGO) of Example 1 magnified by 500,000 times.
FIG. 6 is a SEM image of a sulfur-carbon composite (S-porous rGO) of Example 1 magnified by 200,000 times.
FIG. 7 is a SEM image of a sulfur-carbon composite (S-porous rGO) of Example 1 magnified by 100,000 times.
FIG. 8 is a SEM image of a sulfur-carbon composite (S-porous rGO) of Example 1 magnified by 50,000 times.
FIG. 9 is a SEM image of a sulfur-carbon composite (S-porous rGO) of Comparative Example 1 magnified by 2,500 times.
FIG. 10 is a SEM image of a positive electrode for a lithium-sulfur battery comprising sulfur-carbon composite (S-porous rGO) of Example 1 magnified by 500,000 times.
FIG. 11 is a SEM image of a positive electrode for a lithium-sulfur battery comprising sulfur-carbon composite (S-porous rGO) of Example 1 magnified by 200,000 times.
FIG. 12 is a SEM image of a positive electrode for a lithium-sulfur battery comprising sulfur-carbon composite (S-porous rGO) of Example 1 magnified by 100,000 times.
FIG. 13 is a graph of measurement results of initial discharging capacity of lithium-sulfur batteries of Example 1 and Comparative Example 1.
FIG. 14 is a graph of measurement results of initial discharging capacity of lithium-sulfur batteries of Comparative Example 2 and Comparative Example 3.

### Best Mode

Hereinafter, the present invention will be described in more detail.

### Porous reduced graphene oxide containing pores

The present invention relates to a porous reduced graphene oxide (porous rGO) containing meso and macro pores having a size of 2 to 500 nm.

Conventional graphene has a two-dimensional sheet (2D sheet) structure and has the advantage of excellent electrical and physical properties. However, as conventional graphene has a two-dimensional structure, mass transfer in the vertical direction is limited.

Therefore, the present invention is intended to provide a porous reduced graphene oxide excellent in mass transfer by forming meso and macro pores in the reduced graphene oxide.

The porous reduced graphene oxide of the present invention contains both macro pores and meso pores, and specifically contains pores having a size of 2 to 500 nm, preferably 30 to 300 nm.

If the pore size is less than 2 nm, mass transfer does not occur smoothly. If the pore size exceeds 500 nm, a problem of lowering mechanical strength may occur.

If all of the two or more types of pores are contained, it can be said to have a hierarchical pore structure. The porous reduced graphene oxide of the present invention contains both macro pores and meso pores, and thus has a hierarchical pore structure.

The porous reduced graphene oxide containing pores is agglomerated to have a spherical shape and a diameter of 3 *µ*m or more and less than 10 *µ*m, preferably 4 to 7 *µ*m. The diameter means the largest value among the diameters of the cross section of the porous reduced graphene oxide.

As the porous reduced graphene oxide has a spherical shape, mass transfer through the pores can be maximized by allowing mass transfer in multiple directions.

Accordingly, the porous reduced graphene oxide of the present invention contains pores having a size of 2 to 500 nm and has a spherical shape, so that the ability of mass transfer can be improved.

### Method for preparing porous reduced graphene oxide

In addition, the present invention relates to a method for preparing a porous reduced graphene oxide comprising the steps of
(a) preparing a dispersion in which template particles and graphene oxide are mixed;
(b) spray-drying the dispersion to prepare a template particle-graphene oxide composite; and
(c) heat-treating the template particle-graphene oxide composite to remove the template particles and prepare the porous reduced graphene oxide.

Step (a) is a step of preparing a dispersion in which template particles and graphene oxide (GO) are mixed.

The template particles act as a kind of template to form meso and macro pores having a size of 2 to 500 nm in the reduced graphene oxide. In other words, the template particles having a particle diameter of 2 to 500 nm are dispersed in a dispersion and are self-assembled and arranged in a lattice form due to the unique characteristics of the nanoparticles and the graphene oxides are filled between the gaps between these lattices. Subsequently, the template particles are removed through the heat treatment process of step (c) to be described later, and pores are formed at these removed locations. At this time, the pores formed after removing the template particles form a hierarchical pore structure.

Any template particles that can be used can be used as long as they are commonly used in this field, and can be used especially if they can be removed by a heat treatment process.

Non-limiting examples of the template particle usable in the present invention may be at least one selected from the group consisting of polystyrene, polymethyl methacrylate, polyphenyl methacrylate, polyacrylate, polyalpha-methylstyrene, poly(1-methylcyclohexyl methacrylate), polycyclohexyl methacrylate, polybenzyl methacrylate, polychlorobenzyl methacrylate, poly(1-phenylcyclohexyl methacrylate), poly(1-phenylethyl methacrylate), polyfurfuryl methacrylate, poly(1,2-diphenylethyl methacrylate), polypentabromophenyl methacrylate, polydiphenylmethyl methacrylate, polypentachlorophenyl methacrylate, and copolymers thereof. Preferably, polystyrene can be used.

In particular, due to the fact that the pore having a size of 2 to 500 nm which is a macro pore or meso pore is formed through the removal of the template particle, the size of the pore formed in the porous reduced graphene oxide of the present invention can be determined by the particle diameter of the template particle. Therefore, the template particle has a particle diameter of 2 to 500 nm, preferably 30 to 300 nm.

In addition, since the porosity and specific surface area of the porous reduced graphene oxide are affected by the content of the template particle, the graphene oxides and template particles are mixed in a weight ratio of 1:1 to 1:5, preferably 1:2 to 1:4. If their content is less than the above range, when the density is inversely calculated, 70% by weight or more of sulfur cannot be contained in the carbon material. If their content exceeds the above range, since excessive pores are contained, the strength of the structure itself is weakened, and thus there is a problem that it is difficult to maintain the structure of the electrode that contains the sulfur-carbon composite as a positive electrode active material, which is prepared by using the porous reduced graphene oxide as a carbon material.

The dispersion medium used to prepare a dispersion containing graphene oxides and template particles may be at least one selected from the group consisting of distilled water, alcohol, benzene, toluene, pyridine, acetone, tetrahydrofuran and dimethyl formaldehyde. Preferably, distilled water can be used to prepare an aqueous dispersion

At this time, the concentration of the dispersion can be adjusted by various parameters. However, in order to be easily applied to the spray device and dry quickly while easily removing the dispersion medium, the dispersion contains the graphene oxide in a concentration of 10 to 50 g/L, preferably 10 to 30 g/L.

Step (b) is a step of spray-drying the dispersion prepared in step (a) to prepare a template particle-graphene oxide composite.

The spray drying method used according to an embodiment of the present invention may be performed by supplying the dispersion into a spray device, forming droplets by spraying, and then drying the droplets. In this case, the spray drying device may comprise a spraying device (droplet generating device), a reactor, and a collecting unit, but is not limited thereto.

In this case, the spray drying method may be performed by a spraying method at room temperature/atmospheric pressure, a pressurized spraying method, or an electrostatic spraying method and is not particularly limited in the present invention. As an example, the pressurized spraying method is a method of forming droplets by pressurizing and spraying a dispersion through a pressurized sprayer, and then producing particles through a diffusion dryer. In addition, the electrostatic spraying method is a method of forming droplets through an electrostatic spraying nozzle using a high voltage generator, and then producing particles through a diffusion dryer.

If prepared by the spray drying method according to the present invention, a spherical porous reduced graphene oxide having a hierarchical pore structure can be manufactured in a single process, and it is easy to control the particle diameter and pore size of the porous reduced graphene oxide depending on the process conditions.

According to an embodiment of the present invention, droplets having an average diameter of 0.5 to 100 *µ*m may be formed by the spraying, and the dispersion medium contained in the droplets may be removed by the drying. The diameter of the droplet is preferably in the range of 0.5 to 100 *µ*m, and preferably in the range of 5 to 30 *µ*m. If the diameter of the droplet is less than 0.5 *µ*m, the size of the porous reduced graphene oxide generated may be too small. If the diameter of the droplet exceeds 100 *µ*m, there is a problem that the size of the porous reduced graphene oxide generated may be too large, that is, spherical porous reduced graphene oxide having a diameter of 3 *µ*m or more and less than 10 *µ*m may not be prepared.

The drying process is not particularly limited as long as it is carried out at a temperature higher than the temperature for converting the material constituting the droplets into particles (i.e. porous reduced graphene oxide). Preferably, the drying process is carried out by heat treatment at a temperature in the range of 50 to 180 °C and most preferably 60 to 150 °C in which the dispersion medium can be sufficiently removed. At this time, the drying temperature may vary depending on the dispersion medium used.

The dried template particles-graphene oxide composite is obtained in the form of particles (powder), and is collected through a recovery machine to remove the template particles.

Step (c) is a step of preparing porous reduced graphene oxide by heat-treating the template particle-graphene oxide composite prepared in step (b).

By removing the template particles through the heat treatment, the porous reduced graphene oxide is produced, and the porous reduced graphene oxide aggregates to have a spherical shape.

The temperature for the heat treatment can be selected within a temperature range capable of removing the template particles used, and the time for the heat treatment is not particularly limited, but is appropriately selected within a time range sufficient to remove all the template particles. For example, the temperature for the heat treatment may be 300 to 700 °C and preferably 400 to 600 °C, and the time for the heat treatment may be 1 hour or more, specifically 1 to 10 hours, but is not limited thereto.

In this case, the heat treatment may be performed in an inert atmosphere that does not contain oxygen, that is, in an atmosphere containing an inert gas such as helium, neon, or argon, hydrogen, nitrogen, or SF₆ gas. Through the heat treatment in the inert atmosphere, the template particles may be removed, but is not limited thereto.

In addition, through the heat treatment, not only template particles are removed, but also the graphene oxide may be reduced to produce porous reduced graphene oxide.

In general, the ratio of carbon and oxygen in the graphene oxide is about 1:1, but as the reduced graphene oxide is reduced, the ratio of carbon and oxygen changes to about 9:1. That is, the graphene oxide is reduced by the heat treatment, and as oxygen is removed, the porous reduced graphene oxide has a spherical shape in which several sheets of crumpled paper are overlapped.

In order to make the particle size of the porous reduced graphene oxide uniform, if necessary, a dry ball mill method, a dry jet mill method, or a dry Dyno-mill method may be used, and a specific method may be a method commonly used in the art.

The porous reduced graphene oxide prepared through the above steps exhibits a hierarchical pore structure having both meso pores and macro pores, and specifically contains pores of 2 to 500 nm, preferably 30 to 300 nm.

In addition, the porous reduced graphene oxide exhibits a spherical shape having a diameter of 3 *µ*m or more and less than 10 *µ*m, preferably 4 to 7 *µ*m.

The method of preparing the porous reduced graphene oxide of the present invention has the advantage that it is easy to adjust the content (scale) and enables mass production. In addition, there is an advantage of being able to easily control pores in the porous reduced graphene oxide by controlling the content of the template particles and the temperature for the heat treatment in step (c).

### Sulfur-carbon composite

In addition, the present invention relates to a sulfur-carbon composite comprising the afore-mentioned porous reduced graphene oxide of the present invention and sulfur contained in at least a part of the inside and the surface of the porous reduced graphene oxide.

The porous reduced graphene oxide is the same as described above, and may be prepared by the above-described preparation method.

The sulfur may be at least one selected from the group consisting of elemental sulfur (S₈), an organic sulfur compound, Li₂Sₙ (n≥1), and a carbon-sulfur polymer ((C₂Sₓ)ₙ: x=2.5-50, n≥2). Preferably, the inorganic sulfur (S₈) can be used.

In the sulfur-carbon composite according to the present invention, the porous reduced graphene oxide and sulfur are preferably mixed in a weight ratio of 1:1 to 1:9. If the content of the porous reduced graphene oxide exceeds the above range, the content of sulfur, which is an active material, is lowered, causing problems in securing battery capacity. If the content of the carbon-based material is less than the above range, the content of the porous reduced graphene oxide is insufficient to impart electrical conductivity. Therefore, the content of the porous reduced graphene oxide is properly adjusted within the above range.

The method for complexing the sulfur-carbon composite of the present invention is not particularly limited in the present invention, and a method commonly used in the art may be used. As an example, a method of complexing by simply mixing the porous reduced graphene oxide of the present invention and sulfur, and then heat-treating them can be used.

The sulfur is loaded on at least part of the inside and the surface of porous reduced graphene oxide, and a larger amount of sulfur is loaded inside than the surface.

In the present invention, the inside of the porous reduced graphene oxide means pores of the porous reduced graphene oxide.

The diameter of the sulfur-carbon composite of the present invention is not particularly limited in the present invention, and may be various, but may preferably be 10 to 30 *µ*m. When the above range is satisfied, a high loading electrode can be manufactured. In addition, contact resistance between sulfur-carbon composites can be improved, internal resistance of sulfur-carbon composites can be minimized, binder distribution through control of external surface area can be improved, and the bonding force between sulfur-carbon composites or between sulfur-carbon composite and current collector can be increased.

Since the sulfur-carbon composite contains the aforementioned porous reduced graphene oxide of the present invention as a carbon material, a large amount of sulfur can be evenly loaded, as compared to the conventional sulfur-carbon composite in which the porous reduced graphene oxide is not used as a carbon material. Therefore, the lithium secondary battery, preferably the lithium-sulfur battery, comprising the sulfur-carbon composite of the present invention has excellent reactivity and can obtain improved initial discharging capacity.

### Lithium secondary battery

The present invention relates to a lithium secondary battery comprising a positive electrode; a negative electrode; a separator interposed between the positive electrode and the negative electrode; and an electrolyte solution, wherein the positive electrode comprises the sulfur-carbon composite of the present invention as a positive electrode active material.

As the lithium secondary battery of the present invention comprises the sulfur-carbon composite as a positive electrode active material, the lithium secondary battery of the present invention may be a lithium-sulfur battery.

The positive electrode may include a positive electrode current collector and a positive electrode active material layer coated on one or both surfaces of the positive electrode current collector.

The positive electrode current collector supports the positive electrode active material and is not particularly limited as long as it has high electrical conductivity without causing chemical change in the battery. For example, copper, stainless steel, aluminum, nickel, titanium, palladium, sintered carbon; copper or stainless steel surface-treated with carbon, nickel, silver or the like; aluminum-cadmium alloy or the like may be used as the positive electrode current collector.

The positive electrode current collector can enhance the bonding force with the positive electrode active material by having fine irregularities on its surface, and may be formed in various forms such as film, sheet, foil, mesh, net, porous body, foam, or nonwoven fabric.

The positive electrode active material layer may comprise a positive electrode active material, a binder and an electrically conductive material.

The positive electrode active material comprises the above-described sulfur-carbon composite of the present invention.

As described above, the carbon material in the sulfur-carbon composite is the thermally expanded reduced graphene oxide of the present invention, and as it has a high specific surface area and pore volume, a larger amount of sulfur can be evenly loaded. Therefore, in the present invention, the loading amount of sulfur in the positive electrode may be 2 to 15 mg/cm², and preferably 6 to 10 mg/cm². With such high loading amount, the lithium secondary battery including the positive electrode may exhibit effects of initial discharging capacity and lifespan characteristics.

The positive electrode may further comprise at least one additive selected from a transition metal element, a group IIIA element, a group IVA element, a sulfur compound of these elements, and an alloy of these elements and sulfur, in addition to the positive electrode active material.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg and the like, and the group IIIA element may comprise Al, Ga, In, Ti and the like, and the group IVA element may comprise Ge, Sn, Pb, and the like.

The electrically conductive material is intended to improve electrical conductivity and is not particularly limited as long as it is an electrically conductive material that does not cause chemical change in the lithium secondary battery.

Generally, carbon black, graphite, carbon fiber, carbon nanotube, metal powder, electrically conductive metal oxide, organic electrically-conductive material and the like can be used. Products that are currently marketed as conductive materials may comprise acetylene black series (products from Chevron Chemical Company or Gulf Oil Company), Ketjen Black EC series (products from Armak Company), Vulcan XC-72(a product from Cabot Company) and Super P (a product from MMM). For example, acetylene black, carbon black, graphite, etc. may be used.

In addition, the positive electrode active material may further comprise a binder having a function of holding the positive electrode active material on the positive electrode current collector and connecting between active materials. As the binder, for example, various types of binders such as polyvinylidene fluoride-hexafluoropropylene (PVDF-co-HFP), polyvinylidene fluoride (PVDF), polyacrylonitrile, polymethyl methacrylate, styrene-butadiene rubber (SBR), carboxyl methyl cellulose (CMC) and the like can be used.

The positive electrode as described above may be prepared by the conventional method, and specifically, the positive electrode is manufactured by coating and drying a composition for forming the positive electrode active material layer, which is in a slurry state and is prepared by mixing the positive electrode active material, the electrically conductive material and the binder in an organic solvent, onto the current collector, and optionally compression-molding it onto the current collector to improve the electrode density. At this time, as the organic solvent, it is preferable to use one that can uniformly disperse the positive electrode active material, the binder, and the electrically conductive material and that evaporates easily. Specifically, acetonitrile, methanol, ethanol, tetrahydrofuran, water, isopropyl alcohol and the like are exemplified.

The composition for forming the positive electrode active material layer may be coated on the positive electrode current collector using a conventional method known in the art, and for example, various methods such as dipping method, spraying method, roll coating method, gravure printing method, bar coating method, die coating method, comma coating method, or a combination thereof can be used.

The positive electrode active material layer that has gone through such a coating process is then dried through a drying process to evaporate the solvent or dispersion medium, densify the coating film and make the coating film and the current collector close together. At this time, the drying is carried out according to a conventional method and is not particularly limited.

The negative electrode is a lithium-based metal, and may further comprise a current collector on one side of the lithium-based metal. As the current collector, a negative electrode current collector may be used.

The negative electrode current collector is not particularly limited as long as it has high electrical conductivity without causing chemical changes in the battery, and may be selected from the group consisting of copper, aluminum, stainless steel, zinc, titanium, silver, palladium, nickel, iron, chromium, and alloys and combinations thereof. The stainless steel can be surface-treated with carbon, nickel, titanium, or silver, and the alloy may be an aluminum-cadmium alloy. In addition to those, sintered carbon, a nonconductive polymer surface-treated with an electrically conductive material, or an electrically conductive polymer may be used. In general, a thin copper plate is used as a negative electrode current collector.

In addition, the shape of the negative electrode current collector can be various forms such as a film having or not having fine irregularities on a surface, sheet, foil, net, porous body, foam, nonwoven fabric and the like.

In addition, the negative electrode current collector is in the thickness range of 3 to 500 *µ*m. If the thickness of the negative electrode current collector is less than 3 *µ*m, the current collecting effect is lowered. On the other hand, if the thickness exceeds 500 *µ*m, when folding and then assembling the cell, there is a problem that the workability is reduced.

The lithium-based metal may be lithium or a lithium alloy. At this time, the lithium alloy comprises an element capable of alloying with lithium, and specifically may be an alloy of lithium and at least one selected from the group consisting of Si, Sn, C, Pt, Ir, Ni, Cu, Ti, Na, K, Rb, Cs, Fr, Be, Mg, Ca, Sr, Sb, Pb, In, Zn, Ba, Ra, Ge, and Al.

The lithium-based metal may be in the form of a sheet or foil, and in some cases, may be in a form in which lithium or a lithium alloy is deposited or coated on a current collector by a dry process or a form in which metal and an alloy in a particle phase are deposited or coated by a wet process or the like.

A conventional separator may be interposed between the positive electrode and the negative electrode. The separator is a physical separator having a function of physically separating the electrodes, and can be used without particular limitation as long as it is used as a conventional separator, and particularly, a separator with low resistance to ion migration in the electrolyte solution and excellent impregnating ability for the electrolyte solution is preferable.

In addition, the separator enables the transport of lithium ions between the positive electrode and the negative electrode while separating or insulating the positive electrode and the negative electrode from each other. The separator may be made of a porous, nonconductive, or insulating material. The separator may be an independent member such as a film or a coating layer added to the positive electrode and/or the negative electrode.

Examples of the polyolefin-based porous film which can be used as the separator may be films formed of any polymer alone selected from polyethylenes such as high density polyethylene, linear low density polyethylene, low density polyethylene, and ultrahigh molecular weight polyethylene, and polyolefin-based polymers such as polypropylene, polybutylene, and polypentene, or formed of a polymer mixture thereof.

Examples of the nonwoven fabric that can be used as the separator is a nonwoven fabric formed by a polymer of polyphenyleneoxide, polyimide, polyamide, polycarbonate, polyethyleneterephthalate, polyethylenenaphthalate, polybutyleneterephthalate, polyphenylenesulfide, polyacetal, polyethersulfone, polyetheretherketone, polyester and the like alone or a mixture thereof. Such nonwoven fabrics include a nonwoven fabric in the form of a fiber to form a porous web, that is, a spunbond or a meltblown nonwoven fabric composed of long fibers.

The thickness of the separator is not particularly limited, but is preferably in the range of 1 to 100 *µ*m, more preferably 5 to 50*µ*m. If the thickness of the separator is less than 1 *µ*m, the mechanical properties cannot be maintained. If the thickness of the separator exceeds 100 *µ*m, the separator acts as a resistive layer, thereby deteriorating the performance of the battery.

The pore size and porosity of the separator are not particularly limited, but it is preferable that the pore size is 0.1 to 50 *µ*m and the porosity is 10 to 95%. If the separator has a pore size of less than 0.1 *µ*m or a porosity of less than 10%, the separator acts as a resistive layer. If the separator has a pore size of more than 50 *µ*m or a porosity of more than 95%, mechanical properties cannot be maintained.

The electrolyte solution is a non-aqueous electrolyte containing lithium salt and is composed of a lithium salt and an electrolyte solution. As the electrolyte solution, a non-aqueous organic solvent, organic solid electrolyte, and inorganic solid electrolyte are used.

As the lithium salt, lithium salts conventionally used in the electrolyte solution for the lithium secondary battery may be used without limitation. The lithium salt may comprise, for example, any one selected from the group consisting of LiSCN, LiBr, LiI, LiPF₆, LiBF₄, LiB₁₀Cl₁₀, LiSO₃CF₃, LiCl, LiClO₄, LiSO₃CH₃, LiB(Ph)₄, LiC(SO₂CF₃)₃, LiN(SO₂CF₃)₂, LiCF₃CO₂, LiAsF₆, LiSbF₆, LiAlCl₄, LiFSI, lithium chloroborane, lithium lower aliphatic carboxylate, etc.

In addition, the concentration of the lithium salt in the electrolyte solution may be 0.2 to 2 M, specifically 0.6 to 2 M, more specifically, 0.7 to 1.7 M. If the concentration of the lithium salt is less than 0.2 M, the conductivity of the electrolyte solution may be lowered and thus the performance of the electrolyte solution may be deteriorated. If the concentration of the lithium salt exceeds 2 M, the viscosity of the electrolyte solution may increase and thus the mobility of lithium ions may be reduced.

The non-aqueous organic solvent should dissolve the lithium salt well, and the non-aqueous organic solvent of the present invention may comprise, for example, aprotic organic solvents such as N-methyl-2-pyrrolidinone, propylene carbonate, ethylene carbonate, butylene carbonate, dimethyl carbonate, diethyl carbonate, ethyl methyl carbonate, gamma-butyrolactone, 1,2-dimethoxyethane, 1,2-diethoxyethane, tetrahydrofuran, 2-methyl tetrahydrofuran, dimethylsulfoxide, 1,3-dioxolane, 4-methyl-1,3-dioxane, diethylether, formamide, dimethylformamide, dioxolane, acetonitrile, nitromethane, methyl formate, methyl acetate, phosphate triester, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate, and these organic solvents can be used alone or in a mixed solvent form of two or more solvents thereof.

As the organic solid electrolyte, for example, polyethylene derivatives, polyethylene oxide derivatives, polypropylene oxide derivatives, phosphate ester polymers, polyalginate lysine, polyester sulfide, polyvinyl alcohol, polyvinylidene fluoride, and polymers comprising ionic dissociation groups and the like can be used.

As the inorganic solid electrolyte, for example, nitrides, halides, sulfates and the like of Li such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂ may be used.

To the electrolyte of the present invention, for example, pyridine, triethylphosphite, triethanolamine, cyclic ether, ethylene diamine, n-glyme, hexamethylphosphoric triamide, nitrobenzene derivatives, sulfur, quinone imine dyes, N-substituted oxazolidinone, N,N-substituted imidazolidine, ethylene glycol dialkyl ether, ammonium salt, pyrrole, 2-methoxy ethanol, or aluminum trichloride, etc. may be further comprised for the purpose of improving charging/discharging characteristics, flame retardancy, and the like. In some cases, a halogen-containing solvent such as carbon tetrachloride, ethylene trifluoride or the like can be further comprised for the purpose of imparting nonflammability, and carbon dioxide gas can be further comprised for the purpose of improving storage characteristics at a high temperature, and fluoro-ethylene carbonate (FEC), propene sultone (PRS), fluoro-propylene carbonate (FPC) and the like can be further comprised.

The electrolyte may be used as a liquid electrolyte or also as an electrolyte separator form in a solid state. When used as a liquid electrolyte, a separator made of porous glass, plastic, ceramic, or polymer, etc. is further comprised as a physical separator having a function of physically separating the electrodes.

The lithium secondary battery, preferably lithium-sulfur battery, of the present invention comprises the above-described sulfur-carbon composite as a positive electrode active material. The carbon material in the sulfur-carbon composite contains the aforementioned porous reduced graphene oxide and thus evenly loads a large amount of sulfur through pores, thereby increasing the reactivity of the lithium-sulfur battery. In addition, the carbon material can improve the initial discharging capacity of a lithium-sulfur battery because it has excellent mass transfer ability and wettability by an electrolyte solution.

### Examples

Hereinafter, preferred examples are presented to facilitate understanding of the present invention.

### <Preparation of sulfur-carbon composite>

### Example 1: Preparation of sulfur-porous reduced graphene oxide (S-porous rGO)

An aqueous dispersion of graphene oxide (GO, product name SE2430, Sixth Element company) and a colloid solution of polystyrene (PS, diameter: 500-600 nm) were mixed in a ratio of GO:PS=1 g : 3 g to prepare an aqueous dispersion.

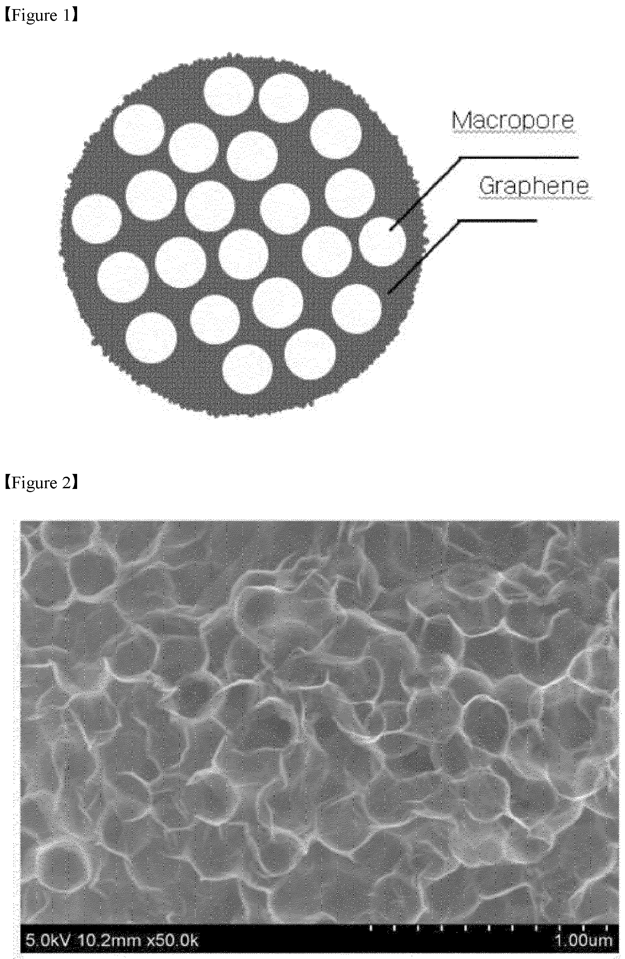

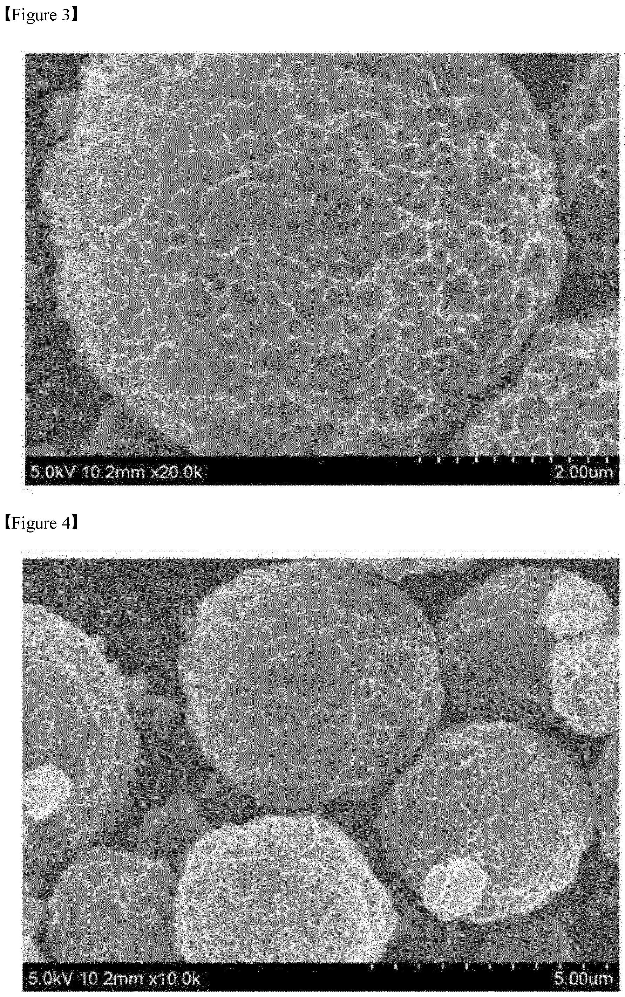

The dispersion thus prepared was spray-dried (Labplant company, SD-Basic) at 140°C to prepare a polystyrene-graphene oxide (PS-GO) composite. After recovering the PS-GO composite, polystyrene was removed by performing heat treatment (heating for 2 hours and holding for 2 hours) at 500°C for 4 hours in an argon (Ar) atmosphere, and the graphene oxide was reduced to prepare a porous reduced graphene oxide (porous rGO) (FIGs. 2 to 4). The pore size was about 15 nm, and the porous reduced graphene oxide was spherical with a diameter of about 9 *µ*m.

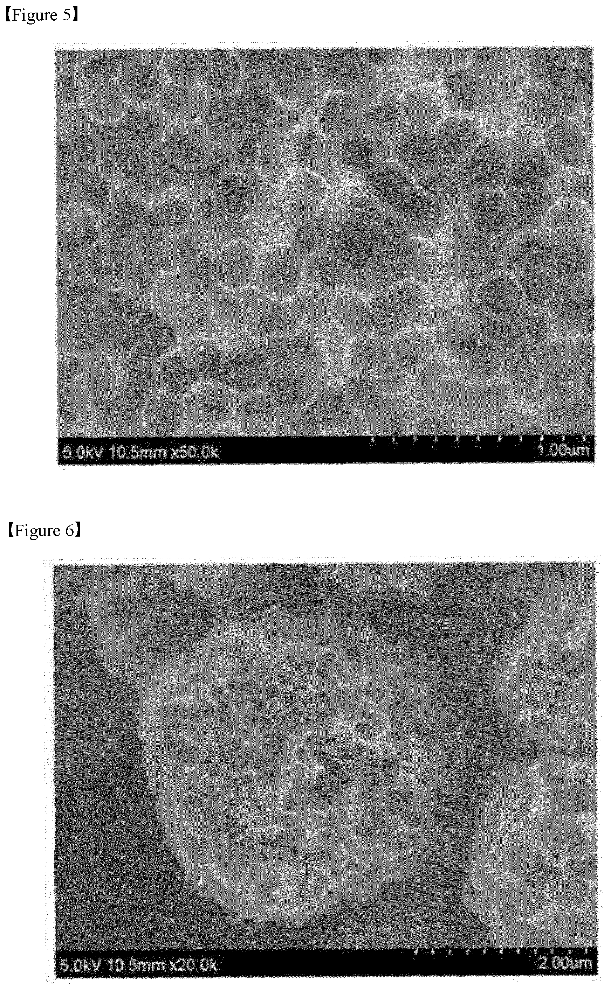

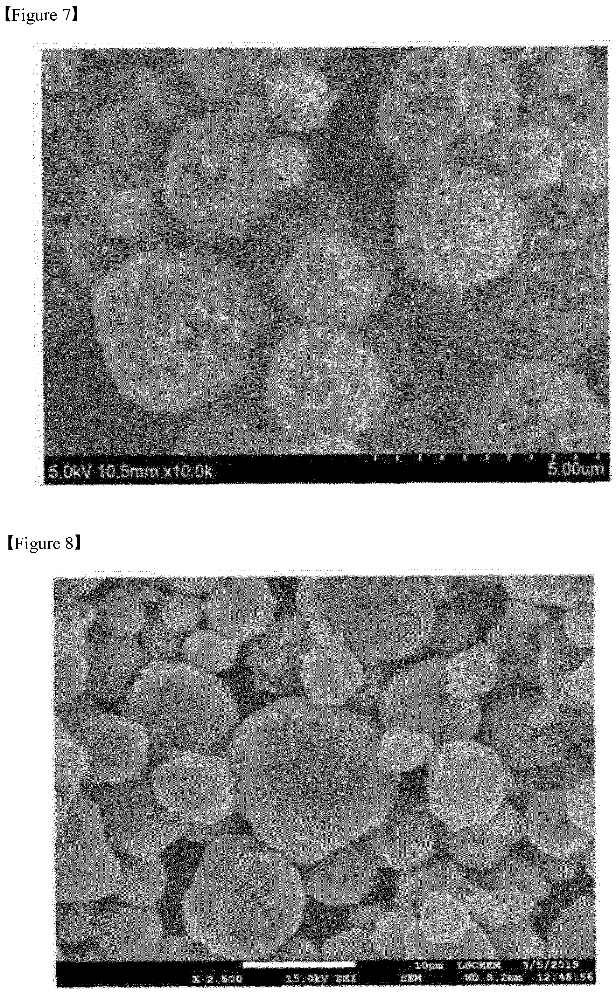

The porous reduced graphene oxide and sulfur were mixed in a weight ratio of 25:75, and then reacted for 35 minutes at a temperature of 155°C to prepare a sulfur-carbon composite (S-porous rGO) (FIGs. 5 to 8).

### Comparative Example 1: Preparation of sulfur-reduced graphene oxide composite (S-rGO)

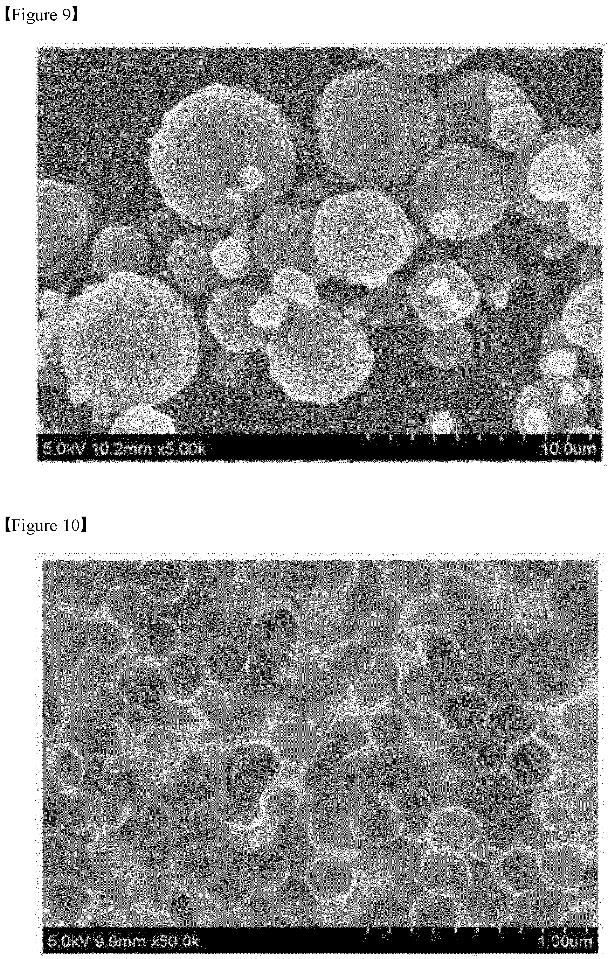

Graphene oxide (GO, product name SE2430, Sixth Element company) was reduced by heat-treating at 500°C for 4 hours in an argon (Ar) atmosphere (heating for 2 hours and holding for 2 hours) to prepare a reduced graphene oxide (rGO) (FIG. 9).

The reduced graphene oxide and sulfur were mixed in a weight ratio of 25:75, and then reacted at a temperature of 155°C for 35 minutes to prepare a sulfur-carbon composite (S-rGO) which contains sulfur loaded on the reduced graphene oxide.

### Comparative Example 2: Preparation of sulfur-carbon nanotube (S-CNT ball) composite

An aqueous dispersion containing carbon nanotubes was prepared.

The dispersion was spray-dried at 140°C (Labplant company, SD-Basic) to prepare a spherical carbon nanotube aggregate.

The carbon nanotube aggregate and sulfur were mixed at a weight ratio of 25:75 and then reacted at a temperature of 155°C for 35 minutes to prepare a sulfur-carbon composite (S-CNT ball) which contains sulfur loaded on the carbon nanotube aggregate.

### Comparative Example 3: Preparation of sulfur-porous carbon nanotube (S-porous CNT ball)

An aqueous dispersion of carbon nanotubes and a colloid solution of polystyrene (PS, diameter: 500-600 nm) were mixed in a ratio of GO:PS=1 g : 3 g to prepare an aqueous dispersion.

The dispersion was spray dried (Labplant company, SD-Basic) at 140 °C to prepare a polystyrene-carbon nanotube (PS-CNT) composite. After recovering the PS-CNT composite, polystyrene was removed by performing heat treatment (heating for 2 hours and holding for 2 hours) at 500 °C for 4 hours in an argon (Ar) atmosphere to prepare a porous carbon nanotube (porous CNT ball). The pore size was about 15 nm, and the porous reduced graphene oxide was spherical with a diameter of about 8*µ*m.

The porous carbon nanotubes and sulfur are mixed in a weight ratio of 25:75, and then reacted at a temperature of 155°C for 35 minutes to prepare a sulfur-carbon composite (S-porous CNT ball) which contains sulfur loaded on the inside (pore) and the surface of the porous carbon nanotube.

### Experimental Example 1: Measurement of initial discharging capacity of lithium-sulfur battery

The sulfur-carbon composites prepared in Example 1 and Comparative Examples 1 to 3 respectively were used as a positive electrode active material to prepare lithium-sulfur batteries.

Each of the sulfur-carbon composites, an electrically conductive material, and a binder were mixed using a ball mill to prepare a slurry for a positive electrode active material. At this time, carbon black was used as the electrically conductive material and polyethylene oxide (molecular weight 5,000,000 g/mol) was used as the binder, and the mixing ratio was 90:5:5 in a weight ratio of sulfur-carbon composite: electrically conductive material:binder.

The slurry for the positive electrode active material was applied to an aluminum current collector and dried to prepare a positive electrode.

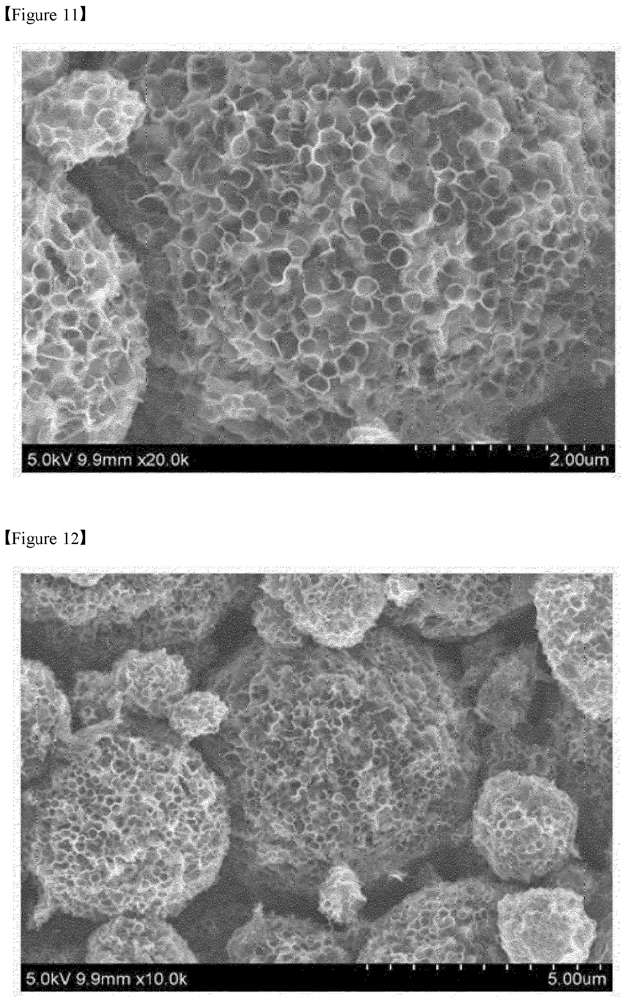

The shape of the positive electrode manufactured by using the sulfur-carbon composite of Example 1 is shown in FIGs. 10 to 12, and it was confirmed that the mechanical strength was well maintained.

At this time, the loading amount of sulfur in the positive electrode active material was 6 mg/cm².

A thin film of lithium metal having a thickness of 40 *µ*m was used as a negative electrode.

The prepared positive electrode and the negative electrode were positioned to face each other, and a polyethylene separator was placed therebetween, and an electrolyte solution was injected to prepare a coin-type lithium-sulfur battery.

As the electrolyte solution, a mixture of DOL (1,3-dioxolane):DEGDME (diethylene glycol dimethyl ether) = 4:6 (v/v) in which 1M LiFSI and 1wt.% LiNO₃ are dissolved was used.

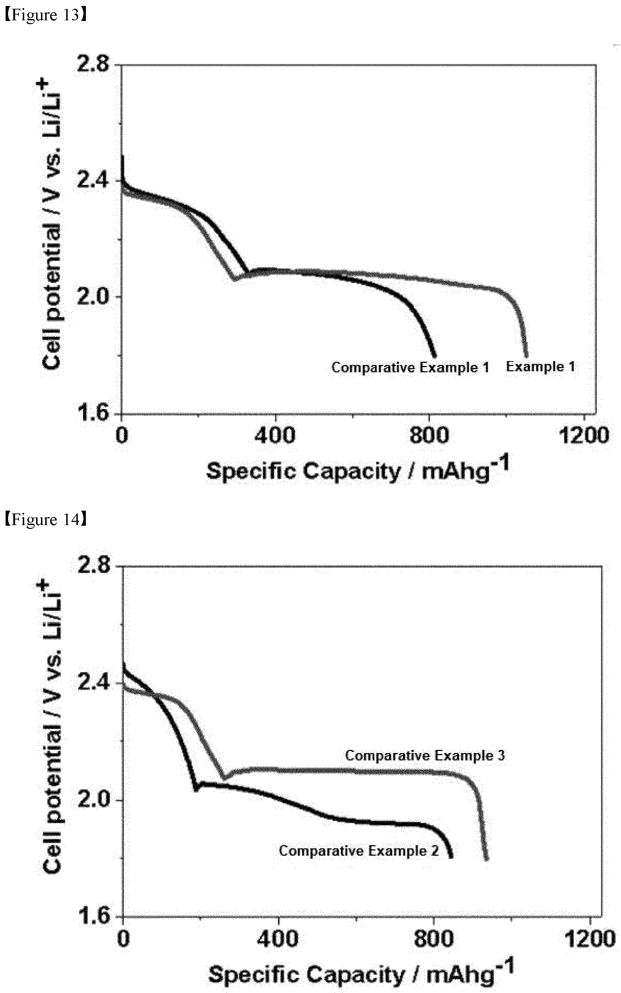

The lithium-sulfur batteries prepared above were tested for change in charging/discharging characteristics using a charging/discharging measuring device. The obtained batteries were examined for the initial discharging capacity under 0.1C/0.1C charging/discharging conditions, and the results are shown in FIGs. 13 and 14.

FIG. 13 shows initial discharging capacities of lithium-sulfur batteries of Example 1 and Comparative Example 1. In the case of Example 1, the initial discharging capacity was measured to be about 1,050 mAh/g. On the other hand, in the case of Comparative Example 1, the initial discharging capacity was measured to be about 800mAh/g. From this, it can be seen that although the same reduced graphene oxide is used, if pores are not contained, mass transfer, degree of sulfur loading, and wettability to electrolyte solutions are not excellent, and reactivity of a lithium-sulfur battery is not improved. That is, it can be seen that as a porous reduced graphene oxide is used, mass transfer, degree of sulfur loading, and wettability to an electrolyte solution are improved, thereby increasing the reactivity of a lithium-sulfur battery, and thus improving the initial discharging capacity.

FIG. 14 shows initial discharging capacities of lithium-sulfur batteries of Comparative Example 2 and Comparative Example 3. It was confirmed that in the case of Comparative Example 2, the initial discharging capacity was measured to be about 830 mAh/g and overvoltage occurred a lot. It was confirmed that in the case of Comparative Example 3, the initial discharging capacity was measured as 940 mAh/g, and overvoltage was improved.

That is, it was confirmed that the carbon material contains pores, the overvoltage is improved and the reactivity is improved. However, Comparative Example 3 used porous carbon nanotubes as a carbon material, which shows lower discharging capacity than Example 1 using the porous reduced graphene oxide as a carbon material.

From this, it can be seen that a porous reduced graphene oxide facilitates mass transfer due to its pores, and can improve the loading amount of sulfur and the wettability of the electrolyte solution, so that in the case of the lithium-sulfur battery comprising the same, the reactivity can be increased and thus the initial discharging capacity can be increased.

## Claims

1. A porous reduced graphene oxide containing meso and macro pores having a size of 2 to 500 nm, wherein the porous reduced graphene oxide is spherical with a diameter of 3 µm or more and less than 10 µm.

2. A method for preparing a porous reduced graphene oxide as defined in claim **1,** comprising the steps of
(a) preparing a dispersion in which template particles and graphene oxide are mixed;
(b) spray-drying the dispersion to prepare a template particle-graphene oxide composite; and
(c) heat treating the template particle-graphene oxide composite to remove the template particles and prepare the porous reduced graphene oxide.

3. The method according to claim 2, wherein the template particles are at least one of polystyrene, polymethyl methacrylate, polyphenyl methacrylate, polyacrylate, polyalpha-methylstyrene, poly(1-methylcyclohexyl methacrylate), polycyclohexyl methacrylate, polybenzyl methacrylate, polychlorobenzyl methacrylate, poly(1-phenylcyclohexyl methacrylate), poly(1-phenylethyl methacrylate), polyfurfuryl methacrylate, poly(1,2-diphenylethyl methacrylate), polypentabromophenyl methacrylate, polydiphenylmethyl methacrylate, polypentachlorophenyl methacrylate, and copolymers thereof.

4. The method according to claim 2, wherein the size of the template particles is 2 to 500 nm.

5. The method according to claim 2, wherein the graphene oxide and template particles of step (a) are mixed in a weight ratio of 1:1 to 1:5.

6. The method according to claim 2, wherein the heat treatment in step (c) is performed at a temperature of 300 to 700°C.

7. A sulfur-carbon composite comprising the porous reduced graphene oxide according to claim 1, and sulfur contained in at least a part of the inside and the surface of the porous reduced graphene oxide.

8. The sulfur-carbon composite according to claim 7, wherein the porous reduced graphene oxide and sulfur are mixed in a weight ratio of 1:1 to 1:9.

9. A lithium secondary battery comprising a positive electrode, a negative electrode, a separator interposed between the positive electrode and the negative electrode, and an electrolyte solution, wherein the positive electrode comprises the sulfur-carbon composite according to claim 7 or 8.

10. The lithium secondary battery according to claim 9, wherein the loading amount of sulfur in the positive electrode is 2 to 15 mg/cm².

11. The lithium secondary battery according to claim 9, which is a lithium-sulfur battery.

## Patentansprüche

1. Poröses, reduziertes Graphenoxid, enthaltend Meso- und Makro-Poren mit einer Größe von 2 bis 500 nm, worin das poröse, reduzierte Graphenoxid sphärisch mit einem Durchmesser von 3 µm oder größer und kleiner als 10 µm ist.

2. Verfahren zur Herstellung eines porösen, reduzierten Graphenoxids gemäß Anspruch 1, umfassend die Schritte
(a) Zubereiten einer Dispersion, worin Templatpartikel und Graphenoxid gemischt sind;
(b) Sprühtrocknen der Dispersion, um ein Templatpartikel-Graphenoxid-Komposit herzustellen; und
(c) Wärmebehandeln des Templatpartikel-Graphenoxid-Komposits, um die Templatpartikel zu entfernen und das poröse, reduzierte Graphenoxid herzustellen.

3. Verfahren gemäß Anspruch 2, worin die Templatpartikel zumindest eines von Polystyrol, Polymethylmethacrylat, Polyphenylmethacrylat, Polyacrylat, Polyalpha-methylstyrol, Poly(1-methylcyclohexylmethacrylat), Polycyclohexylmethacrylat, Polybenzylmethacrylat, Polychlorbenzylmethacrylat, Poly(1-phenylcyclohexylmethacrylat), Poly(1-phenylethylmethacrylat), Polyfurfurylmethacrylat, Poly(1,2-diphenylethylmethacrylat), Polypentabromphenylmethacrylat, Polydiphenylmethylmethacrylat, Polypentachlorphenylmethacrylat und Copolymeren hiervon sind.

4. Verfahren gemäß Anspruch 2, worin die Größe der Templatartikel 2 bis 500 nm beträgt.

5. Verfahren gemäß Anspruch 2, worin im Schritt (a) das Graphenoxid und die Templatpartikel in einem Gewichtsverhältnis von 1:1 bis 1:5 gemischt werden.

6. Verfahren gemäß Anspruch 2, worin die Wärmebehandlung im Schritt (c) bei einer Temperatur von 300 bis 700°C durchgeführt wird.

7. Schwefel-Kohlenstoff-Komposit, umfassend das poröse, reduzierte Graphenoxid gemäß Anspruch 1 und Schwefel, welcher in zumindest einem Teil des Inneren und der Oberfläche des porösen, reduzierten Graphenoxids enthalten ist.

8. Schwefel-Kohlenstoff-Komposit gemäß Anspruch 7, worin das poröse, reduzierte Graphenoxid und Schwefel in einem Gewichtsverhältnis von 1:1 bis 1:9 gemischt sind.

9. Lithium-Sekundärbatterie, umfassend eine positive Elektrode, eine negative Elektrode, einen zwischen der positiven Elektrode und der negativen Elektrode vorgesehenen Separator und eine Elektrolytlösung, worin die positive Elektrode das Schwefel-Kohlenstoff-Komposit gemäß Anspruch 7 oder 8 umfasst.

10. Lithium-Sekundärbatterie gemäß Anspruch 9, worin die Beladungsmenge von Schwefel in der positiven Elektrode 2 bis 15 mg/cm² beträgt.

11. Lithium-Sekundärbatterie gemäß Anspruch 9, welche eine Lithium-Schwefel-Batterie ist.

## Revendications

1. Oxyde de graphène poreux réduit contenant des méso- et macropores présentant une taille de 2 à 500 nm, dans lequel l'oxyde de graphène poreux réduit est sphérique avec un diamètre de 3 µm ou plus et inférieur à 10 µm.

2. Procédé de préparation d'un oxyde de graphène poreux réduit tel que défini selon la revendication 1, comprenant les étapes de :
(a) la préparation d'une dispersion dans laquelle des particules modèles et de l'oxyde de graphène sont mélangés ;
(b) le séchage par pulvérisation de la dispersion pour préparer un composite oxyde de graphène-particule modèle ; et
(c) le traitement thermique du composite oxyde de graphène-particule modèle pour éliminer les particules modèles et préparer l'oxyde de graphène poreux réduit.

3. Procédé selon la revendication 2, dans lequel les particules modèle sont au moins l'une parmi le polystyrène, le polyméthacrylate de méthyle, le polyméthacrylate de phényle, le polyacrylate, le polyalphaméthylstyrène, le poly(l-méthylcyclohexylméthacrylate), le polycyclohexylméthacrylate, le polyméthacrylate de benzyle, le polyméthacrylate de chlorobenzyle, le poly(l-phénylcyclohexyl méthacrylate), le poly(l-phényléthyl méthacrylate), le polyméthacrylate de furfuryle, le poly(l,2-diphényléthylméthacrylate), le polypentabromophénylméthacrylate, le polydiphénylméthylméthacrylate, le polypentachlorophénylméthacrylate, et leurs copolymères.

4. Procédé selon la revendication 2, dans lequel la taille des particules modèles est de 2 à 500 nm.

5. Procédé selon la revendication 2, dans lequel l'oxyde de graphène et les particules modèles de l'étape (a) sont mélangés dans un rapport pondéral de 1:1 à 1:5.

6. Procédé selon la revendication 2, dans lequel le traitement thermique de l'étape (c) est réalisé à une température de 300 °C à 700 °C.

7. Composite soufre-carbone comprenant l'oxyde de graphène poreux réduit selon la revendication 1, et le soufre contenu dans au moins une partie de l'intérieur et de la surface de l'oxyde de graphène poreux réduit.

8. Composite soufre-carbone selon la revendication 7, dans lequel l'oxyde de graphène poreux réduit et le soufre sont mélangés dans un rapport pondéral de 1:1 à 1:9.

9. Batterie secondaire au lithium comprenant une électrode positive, une électrode négative, un séparateur interposé entre l'électrode positive et l'électrode négative, et une solution d'électrolyte, dans laquelle l'électrode positive comprend le composite soufre-carbone selon la revendication 7 ou la revendication 8.

10. Batterie secondaire au lithium selon la revendication 9, dans laquelle la quantité de charge de soufre dans l'électrode positive est de 2 à 15 mg/cm².

11. Batterie secondaire au lithium selon la revendication 9, qui est une batterie lithium-soufre.
